# EUROPEAN PATENT SPECIFICATION

(11) **EP 4 306 827 B1**
(45) Date of publication and mention of the grant of the patent: **27.11.2024**
(21) Application number: 23179482.7
(22) Date of filing: 15.06.2023
(51) Int. Cl.: F16K 3/08, F16K 11/00, F16K 31/52, F16K 31/524

(54) **VALVE ASSEMBLY**
VENTILANORDNUNG
ENSEMBLE SOUPAPE

(30) Priority: 15.07.2022 GB 202210406
(43) Date of publication of application: 17.01.2024
(73) Proprietor: Kohler Mira Limited, Cheltenham, Gloucestershire GL52 5EP (GB)
(72) Inventor: LEA, Ben, Cheltenham, GL52 5EP (GB); JONES, Oliver, Cheltenham, GL52 5EP (GB); GRIFFITHS, Daniel, Cheltenham, GL52 5EP (GB)
(74) Representative: Barker Brettell LLP

(56) References cited:
- CN-A- 107 387 790
- DE-A1- 102019 103 609
- US-A- 2 615 671
- US-A1- 2001 025 939
- US-A1- 2018 313 066
- US-B2- 11 067 197

## Description

The present disclosure relates to a fluid flow control valve assembly for controlling a flow of fluid through an ablutionary fitting. The disclosure also relates to a controller for use in a plumbing system or an ablutionary system comprising such a fluid flow control valve assembly and to a plumbing system or an ablutionary system comprising such a fluid flow control valve assembly and/or such a controller.

In a shower system, a means operable to produce a principal stream of water having a user-desired temperature may be employed. The means operable to produce the principal stream of water having the user-desired temperature may include, for example, a mixer valve, e.g. a thermostatic mixer valve, or an instantaneous water heater. The principal stream of water having the user-desired temperature is then conveyed to a fluid delivery device such as a shower head. Typically, the shower system may comprise one or more user input means operable to control the temperature and/or the flow of water delivered by the fluid delivery device.

DE 10 2019 103609 A1 discloses a valve for a flush-mounted body of a sanitary fitting comprising a valve housing having a cold water connection, a hot water connection and a drain connection for forwarding a tempered liquid. It also discloses a volume flow control unit and a temperature control unit.

US 2018/313066 A1 discloses a shower controlling device comprising a switching valve spaced apart from a mixing valve, said switchining valve being suitable for controlling the switching on/off of an outlet tube.

US 2001/025939 A1 discloses a self-closing water-saving device that employs the use of an elastic force of an elastic member and oil flowing or friction to close the device in a constant time after it is opened.

CN 107 387 790 A discloses a multifunctional shower which has a built-in water purifier and the device may be switched between raw water output and purified water output and there is a flow regulating mechanism comprising a gear drive shaft.

US 2 615 671 A discloses a metering valve comprising holes at one end such that the metering valve allows a uniform rate of discharge of fluid per unit movement of a cam without resorting to replacement of the came with a uniformly sloped cam.

A first aspect provides a fluid flow control valve assembly for controlling a flow of fluid through an ablutionary fitting comprising:
a fluid flow control valve comprising:
   a first flow control member comprising one or more flow channels;
   a second flow control member disposed adjacent to the first flow control member, wherein the second flow control member is moveable relative to the first flow control member;
a first valve actuator arranged to cause movement of the second flow control member relative to the first flow control member; and
an operating member operably connected to the first valve actuator;
wherein, in use, the operating member is operable to be moved in a linear direction and the operating member acts in turn on the first valve actuator to move the second flow control member, wherein movement of the second flow control member adjusts the position of the second flow control member relative to the one or more flow channels in the first flow control member such that a flow rate through the fluid flow control valve may be increased or decreased.

The fluid flow control valve assembly may allow for relatively fine user control of the flow of fluid through the ablutionary fitting.

The first flow control member and the second flow control member are arranged such that the fluid flow rate through the fluid flow control valve is always a non-zero value.

The first valve actuator may be arranged to cause linear movement of the second flow control member relative to the first flow control member.

The first valve actuator comprises a lever.

The second flow control member may be movable linearly relative to the first flow control member.

The first valve actuator may be arranged to cause rotation of the second flow control member relative to the first flow control member.

The second flow control member may be rotatable about an axis perpendicular to the second flow control member. The axis may be a central axis perpendicular to the second flow control member.

The first flow control member may be a first flow control plate.

The second flow control member may be a second flow control plate.

One or more of the flow channels may comprise an aperture passing through the first flow control member.

In an implementation, a length of the operating member may be adjustable.

The length of the operating member may be adjustable between a plurality of discrete lengths.

For instance, one or more connecting pieces may be utilised to change an effective length of the operating member. The connecting piece(s) may be configured to connect an end of the operating member to another elongate member. The connecting piece or connecting pieces may be configured to provide two or more different connecting piece lengths between the end of the operating member and the other elongate member,

Alternatively, the length of the operating member may be adjustable to have any length within a range of lengths.

The ablutionary fitting may comprise a means operable to provide a principal stream of fluid, e.g. water, having a user-desired temperature. The means operable to provide the principal stream of fluid having the user-desired temperature may include, for example, a mixer valve, e.g. a thermostatic mixer valve, or an instantaneous water heater.

A second aspect provides a controller for use in a plumbing system or an ablutionary system, wherein the controller comprises a user input means operably connected to the operating member of a fluid flow control valve assembly according to the first aspect.

The user input means may include, for example, a touchscreen, a button, a lever or a rotary control member such as a rotary dial.

In an implementation, the user input means may comprise a rotary control member having a cam surface, the cam surface being configured to cause directly or indirectly linear movement of the operating member when a user rotates the rotary control member.

The controller may be a shower controller.

A third aspect provides a plumbing system or an ablutionary system comprising a fluid flow control valve assembly according to the first aspect and/or a controller according to the second aspect.

The plumbing system or the ablutionary system may comprise one or more fluid delivery devices downstream of the fluid control valve assembly.

The plumbing system or the ablutionary system may comprise a shower system.

Except where mutually exclusive, any of the features of any of the above described aspects may be employed mutatis mutandis in any of the other above described aspects.

Example embodiments will now be described with reference to the accompanying drawings, in which:
Figure 1 shows an example of a shower controller;
Figure 2 shows an example of a shower system;
Figure 3 is a cross-sectional view of a portion of an example of a fluid flow control valve assembly;
Figure 4 is another cross-sectional view of a portion the fluid flow control valve assembly shown in part in Figure 3;
Figure 5 is a side view of the fluid flow control valve assembly shown in part in Figures 3 and 4;
Figure 6 is a partially cut-away side view of the fluid flow control valve assembly shown in Figure 5;
Figure 7 illustrates a way of adjusting the effective length of the operating member of the fluid flow control valve assembly shown in Figures 3, 4, 5 and 6;
Figure 8 is a sectional view of the control valve assembly shown in Figures 3, 4, 5, 6 and 7, with the second flow control member in a first end state when the operating member has a first effective length;
Figure 9 is a sectional view of the control valve assembly shown in Figures 3, 4, 5, 6 and 7 with the second flow control member in a second end state when the operating member has the first effective length;
Figure 10 is a sectional view of the control valve assembly shown in Figures 3, 4, 5, 6 and 7 with the second flow control member in a second end state when the operating member has a second effective length;
Figure 11 shows a cross-sectional view of a portion of another example of a fluid flow control valve assembly;
Figure 12 is a cross-sectional view looking down on the first flow control member of the fluid control valve assembly shown in Figure 11; and
Figure 13 shows the mechanism that operates the fluid flow control valve assembly of Figure 11.

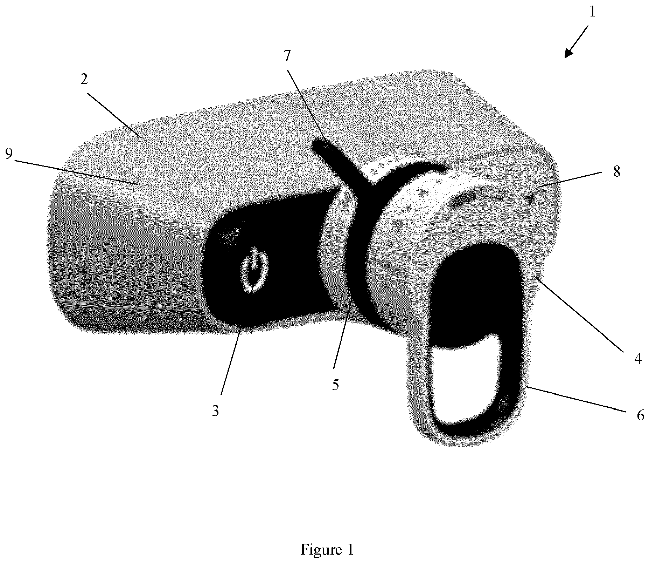

Figure 1 shows an example of a shower controller 1. The shower controller 1 is configured to be fixed to a surface such as a wall.

The shower controller 1 comprises a casing 2. The casing 2 is configured to shroud one or more fluid handling components and plumbing connections. The casing 2 may thus provide protect the one or more fluid handling components and plumbing connections from accidental damage or dirt ingress. The casing 2 may also provide the shower controller 1 with a desired appearance. The shape and dimensions of the casing 2 may be varied to provide different appearances, in order to provide different design aesthetics without necessarily having to change the arrangement of the one or more fluid handling components and plumbing connections shrouded by the casing 2.

Typically, the casing 2 may shroud a thermostatic mixer valve (not shown). The thermostatic mixer valve may be connected to a supply of hot water and to a supply of cold water. The thermostatic mixer valve operates to mix the hot water and the cold water to produce a principal stream having a user-desired temperature. The principal stream having the user-desired temperature is then conveyed from an outlet of the thermostatic mixer valve to a fluid delivery device (not shown) such as a shower head downstream of the thermostatic mixer valve.

The shroud 2 generally comprises a front surface 8, a side wall 9 extending in a rearward direction from the front surface 8 and an open end opposite the front surface 8.

On the front surface 8 of the shower controller 1 there is a button 3 for turning on and off flow to the fluid delivery device. The button 3 may be operably coupled to an on-off valve having a first state that allows flow to the fluid delivery device and a second state that prevents flow to the fluid delivery device.

The shower controller 1 further comprises a first rotary control member 4 and a second rotary control member 5 disposed forward of the front surface 8. The first rotary control member 4 is disposed forward of the second rotary control member 5, i.e. the first rotary control member is further from the front surface 8 than the second rotary control member 5.

The first rotary control member 4 provides temperature control. The second rotary control member 5 provides flow control.

The first rotary control member 4 comprises a first handle 6 to facilitate use thereof. The second rotary control member 5 comprises a second handle 7 to facilitate use thereof. The first rotary control member 4 and the second rotary control member 5 are configured to be rotatable about a common rotation axis normal to the front surface 8.

The first rotary control member 4 is operably connected to the thermostatic mixer valve.

As will be described in more detail herein, the second rotary control member 5 is operably connected to a fluid flow control valve assembly downstream of the outlet of the thermostatic mixer valve.

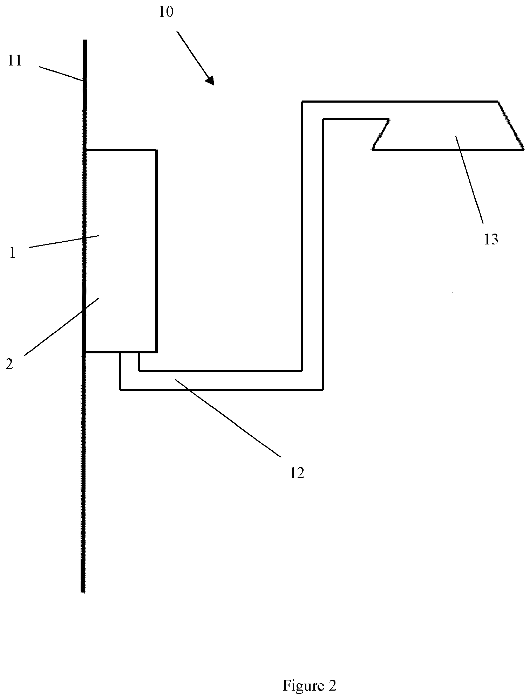

Figure 2 illustrates schematically an example of a shower system 10 comprising the shower controller 1. The shower controller 1 is mounted on a wall 11.

The casing 2 shrouds a thermostatic mixer valve (not shown). The thermostatic mixer valve is connected to a supply of hot water and to a supply of cold water. The thermostatic mixer valve operates to mix the hot water and the cold water to produce a principal stream having a user-desired temperature. The principal stream having the user-desired temperature is then conveyed from an outlet of the thermostatic mixer valve via a shower hose 12 to a shower head 13 downstream of the thermostatic mixer valve. A fluid flow control valve assembly (not shown) according to the present disclosure located downstream of the outlet of the thermostatic mixer valve is operable to control a flow of water from the outlet of the thermostatic mixer valve to the shower hose 12 and the shower head 13 connected thereto.

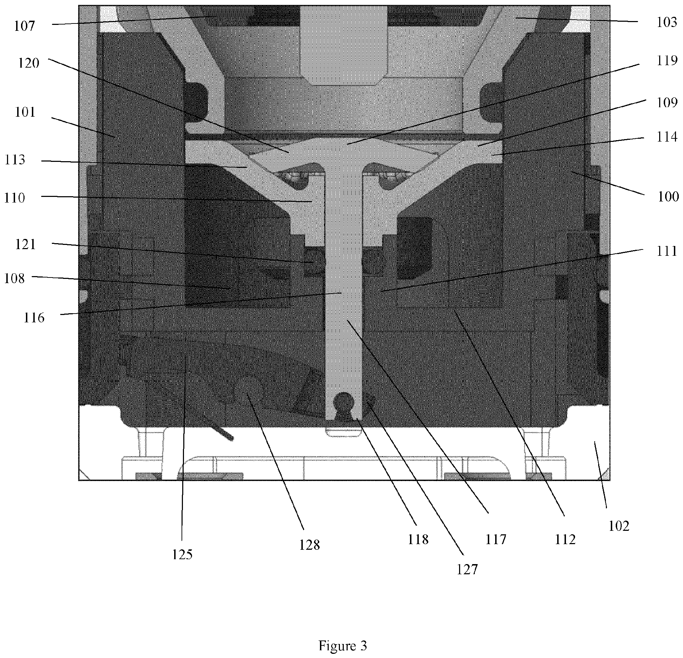

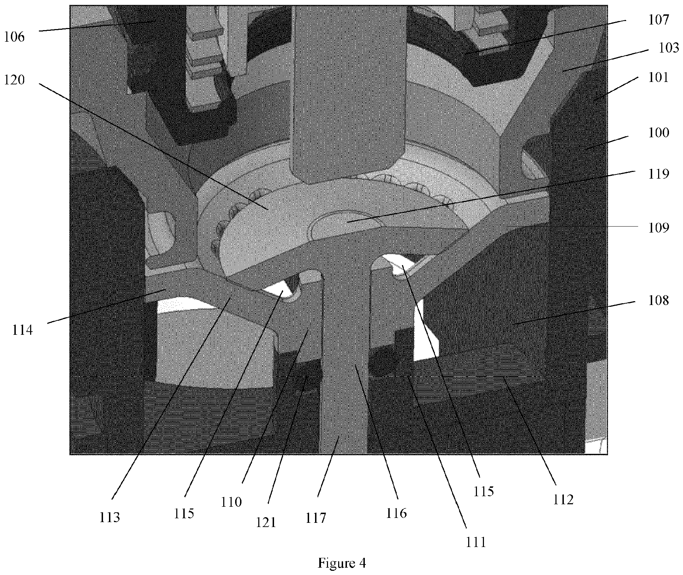

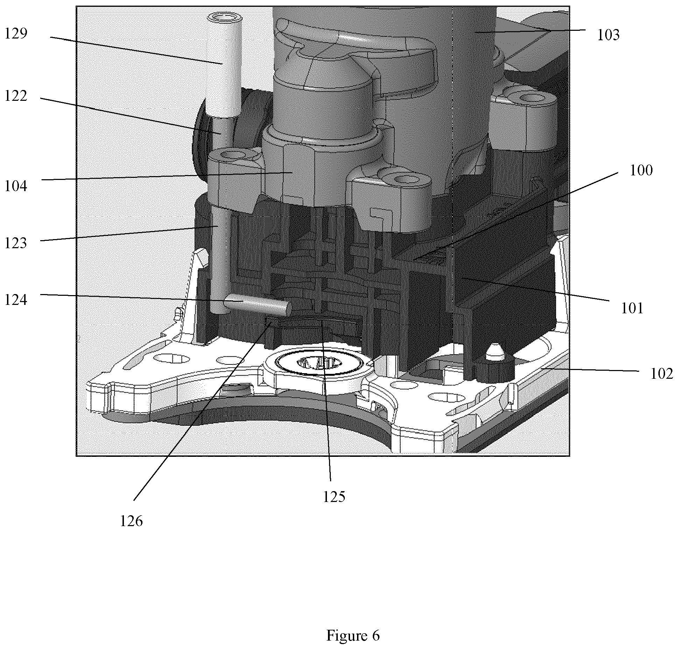

Referring to Figures 3, 4, 5 and 6, there is shown an example of a fluid flow valve assembly 100.

The fluid flow valve assembly 100 comprises a body 101 attached to a mounting plate 102 adapted to be fixed, in use, to a surface such as a wall. A thermostatic mixer valve assembly 103 is attached to the body 101 of the fluid flow valve assembly 100. The body 101 is disposed between the mounting plate 102 and the thermostatic mixer valve assembly 103.

The thermostatic mixer valve assembly 103 comprises a first inlet 104 configured to be adapted to a first fluid supply pipe and a second inlet 105 configured to be adapted to a second fluid supply pipe. The first fluid supply pipe may convey cold water and the second fluid supply pipe may convey hot water or *vice versa.*

The thermostatic mixer valve assembly 103 comprises a thermostatic mixer valve cartridge 106 including a thermostatic mixer valve. The thermostatic mixer valve has a first valve inlet in fluid communication with the first inlet 104 and a second valve inlet in fluid communication with the second inlet 105. The thermostatic mixer valve operates to mix the hot water and the cold water to produce a principal stream having a user-desired temperature. The thermostatic mixer valve has an outlet 107 through which the principal stream having the user-desired temperature exits the thermostatic mixer valve cartridge 106.

A waterway 108 within the body 101 is in fluid communication with the outlet 107. Disposed within the waterway 108 is a first flow control member 109. The first flow control member 109 extends across the waterway 108 and is fixed relative to the body 101. The first flow control member 109 comprises a hub portion 110 with a central aperture therethrough. The hub portion 110 is connected to a mount portion 111 protruding from a base 112 of the waterway 108 within the body 101.

The first flow control member 109 comprises a conical portion 113 extending radially outwards and upwards (i.e. in a direction away from the mount portion 111) from the hub portion 110 to a rim 114.

A plurality of apertures 115 in the conical portion 113 each provide a fluid flow channel through the first flow control member 109.

The fluid flow control valve assembly 100 comprises a second flow control member 116 that is linearly moveable relative to the first flow control member 109. The second flow control member 116 comprises a shaft 117 having a first end 118 and a second end 119. From the first end 118 to the second end 119, the shaft 117 extends through an aperture in the mount portion 111 and the central aperture in the hub portion 110 of the first flow control member 109. The second flow control member 116 comprises a stopper portion 120 connected to the second end 119 of the shaft 117. The stopper portion 120 extends radially and downwardly from the second end 119 of the shaft 117. An O-ring 121 is disposed around the shaft 117 in a cavity defined by the mount portion 111 and the hub portion 110 of the first flow control member 109. The O-ring 121 provides a fluid-tight seal around the shaft 117.

An operating member 122 comprises a rod 123 received within a vertical channel in the body 101. The operating member 122 comprises a foot portion 124 extending laterally from a lower end of the rod 123. The foot portion 124 is perpendicular to the rod 123. The foot portion 124 protrudes from the vertical channel and passes through a vertical slot. An end of the foot portion 124 distal from the rod 123 sits on top of a first end 126 of a lever 125.

A second end 127 of the lever 125 is pivotally connected to the first end 118 of the shaft 117 of the second flow control member 116. The lever 125 is configured to pivot, in use, about a fulcrum 128 between the first end 126 of the lever 125 and the second end 127 of the lever 125. The distance from the first end 126 of the lever 125 to the fulcrum 128 is greater than the distance from the second end 127 of the lever 125 to the fulcrum 128.

A connecting piece 129 comprising a tubular member with a blind hole in each end is disposed on an upper end of the rod 123 of the operating member 122. The upper end of the rod 123 of the operating member 122 is received in one of the blind holes of the connecting piece 129. An end of another elongate member (not shown) is received in the other of the blind holes of the connecting piece 129. The other elongate member may be operably connected to a user input means (not shown) configured to cause linear movement of the other elongate member. The user input means may comprise, for example, a button, a lever, a slider or a rotary dial. For instance, the second rotary control member 5 (Figure 1) may have a cam surface on an underside thereof, the cam surface being configured to act on the other elongate member to cause linear movement of the other elongate member in a substantially vertical direction when a user rotates the second rotary control member 5.

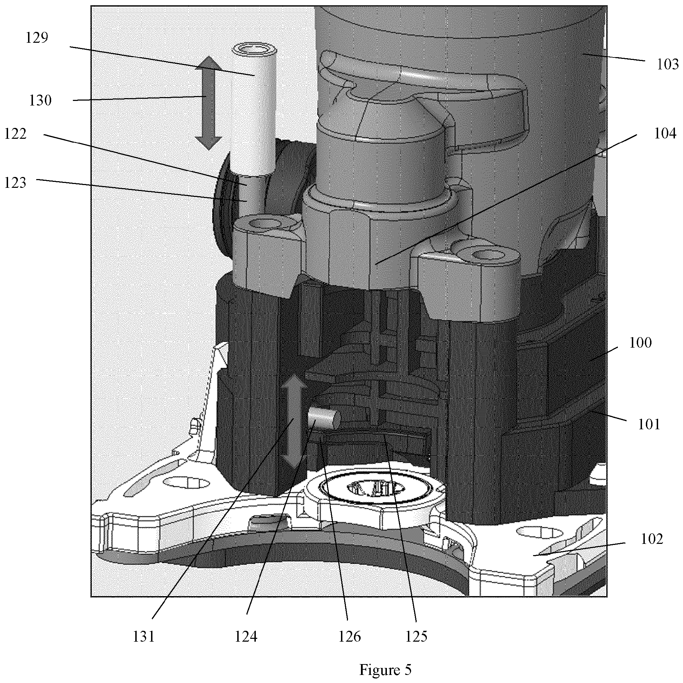

With reference to Figure 5, the linear movement of the other elongate member causes the linear movement of the operating member 122 in the vertical channel in the body 101, as indicated by a first block arrow 130. Consequently, the foot portion 124 of the operating member 122 acts on the first end 126 of the lever 125, as indicated by a second block arrow 131.

When, in use, the foot portion 124 of the operating member 122 pushes the first end 126 of the lever 125 down, the second flow control member 116 moves linearly in an upward direction relative to the first flow control member 109. Consequently, the stopper portion 120 provides less of an obstruction to fluid flow through the apertures 115 in the conical portion 113 of the first flow control member 109.

The lever 125 is biased against an underside of the foot portion 124 such that the first end 126 of the lever 125 remains in contact with the underside of the foot portion 124 during operation of the fluid flow control valve assembly 100. Hence, when, in use, the foot portion 124 of the operating member 122 moves upwards, the first end 126 of the lever 125 moves upwards and the second end 127 of the lever 125 acts on the second flow control member 116 to move the second flow control member 116 linearly in a downward direction relative to the first flow control member 109. Consequently, the stopper portion 120 provides more of an obstruction to fluid flow through the apertures 115 in the conical portion 113of the first flow control member 109. The operating member 122 and the lever 125 may be configured such that the second flow control member 116 has a range of movement from a first end state wherein the stopper portion 120 obstructs fluid flow through the apertures 115 of the first flow control member 109 to a greatest extent and a second end state wherein the stopper portion 120 obstructs fluid flow through the apertures 115 of the first flow control member 109 to a least extent.

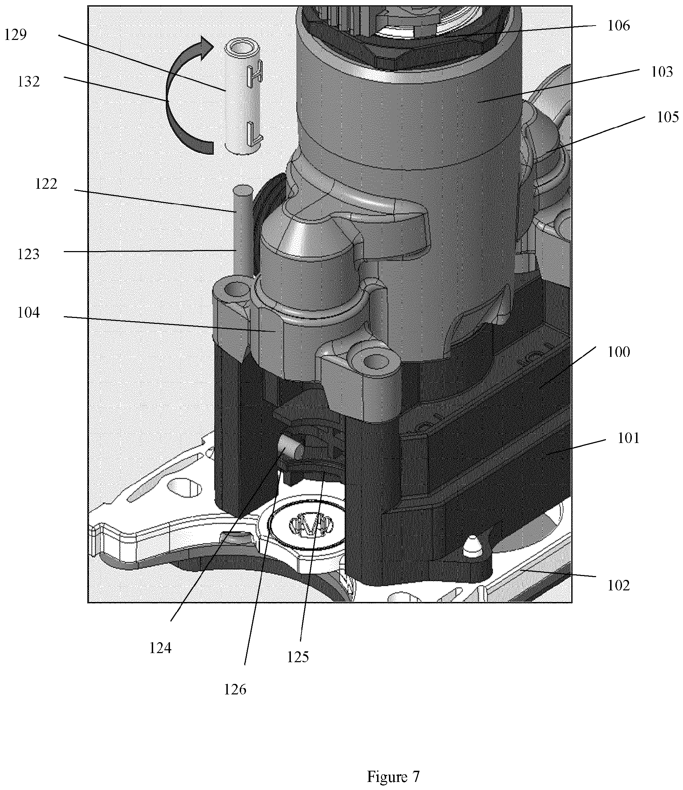

With reference to Figure 7, the connecting piece 129 may be configured such that an effective length of the operating member 122 may be varied, e.g. by inverting the connecting piece 129, as indicated by a third block arrow 132. Alternatively or additionally, the effective length of the operating member 122 may be varied by substituting the connecting piece 129 with a different connecting piece, in which the relative depths of the blind holes are different.

It will be appreciated that use of the connecting piece 129 in this way is only one example of a way of adjusting the length of the operating member 122. Other ways of adjusting the length of the operating member 122 will be apparent to the person skilled in the art.

In some implementations, the connecting piece 129 and the other elongate member may not be present. In such an implementation, the user input means may act directly or indirectly on the upper end of the rod 123 of the operating member 122.

In some implementations, the length of the operating member 122 may not be adjustable.

Adjusting the length of the operating member 122 allows the positions of the first end state and the second end state of the range of movement of the second flow control member 116 to be changed. Therefore, the fluid flow control valve assembly 100 can be configured to provide better or more appropriate fluid flow control for a given application when being installed at a site of use. The selected configuration for providing better or more appropriate fluid flow control may depend, for example, on the pressure of the mains water supply at a given site of use.

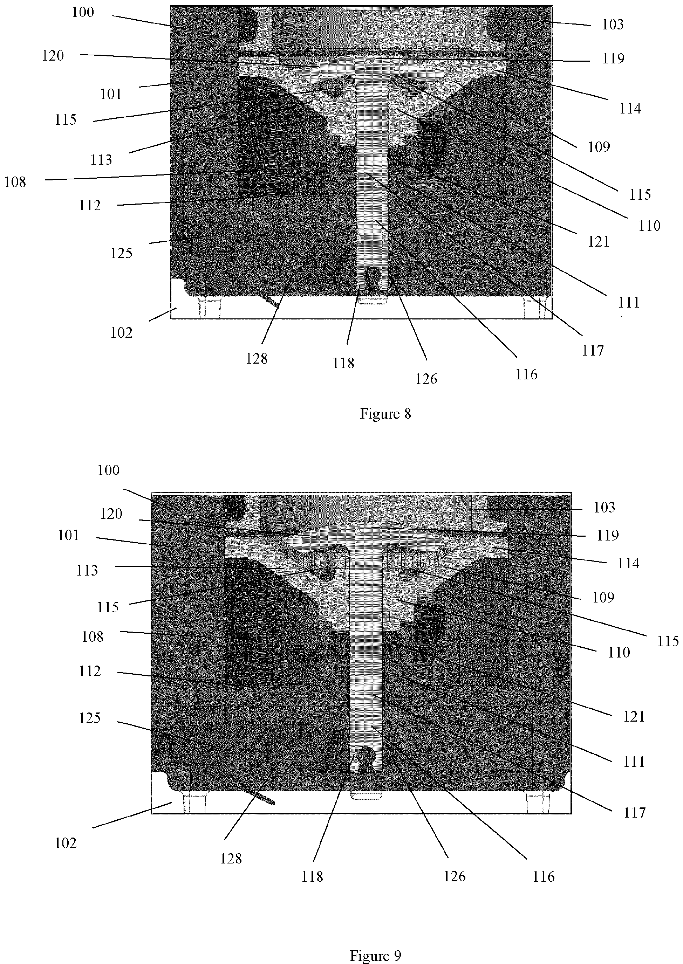

Figures 8, 9 and 10 show three sectional views of a portion of the fluid flow control valve assembly 100 and illustrate how the first end state and the second end state of the range of movement of the second flow control member 116 can be changed by adjusting the effective length of the operating member 122, e.g. by using the connecting piece 129. In this example, the connecting piece 129 is configured such that the operating member has a first effective length when the connecting piece 129 is in a first orientation and a second effective length when the connecting piece 129 has been inverted such that the connecting piece is in a second orientation. In this example, the second effective length of the operating member 122 is longer than the first effective length of the operating member 122.

Figure 8 illustrates a scenario wherein the operating member 122 has the first effective length. The second flow control member 116 is shown in the first end state wherein the stopper portion 120 obstructs fluid flow through the apertures 115 of the first flow control member 109 to the greatest extent. The stopper portion 120 is resting on the conical portion 113 of the first flow control member 109.

Figure 9 further illustrates the scenario wherein the operating member 122 has the first effective length. The second flow control member 116 is shown in the second end state wherein the stopper portion 120 obstructs fluid flow through the apertures 115 of the first flow control member 109 to the least extent. There is a gap between the stopper portion 120 and the conical portion 113 of the first flow control member 109.

The scenarios illustrated in Figures 8 and 9 may be appropriate for providing fluid flow control at a site of use having a high pressure mains water supply. It will be appreciated that Figure 8 illustrates the lowest flow condition and Figure 9 illustrates the highest flow condition through the fluid flow control valve assembly 100 with the operating member 122 having the first effective length.

Alternatively, Figure 9 may illustrate a scenario wherein the operating member 122 has the second effective length. The second flow control member 116 is shown in the first end state wherein the stopper portion 120 obstructs fluid flow through the apertures 115 of the first flow control member 109 to the least extent. There is a gap between the stopper portion 120 and the conical portion 113 of the first flow control member 109.

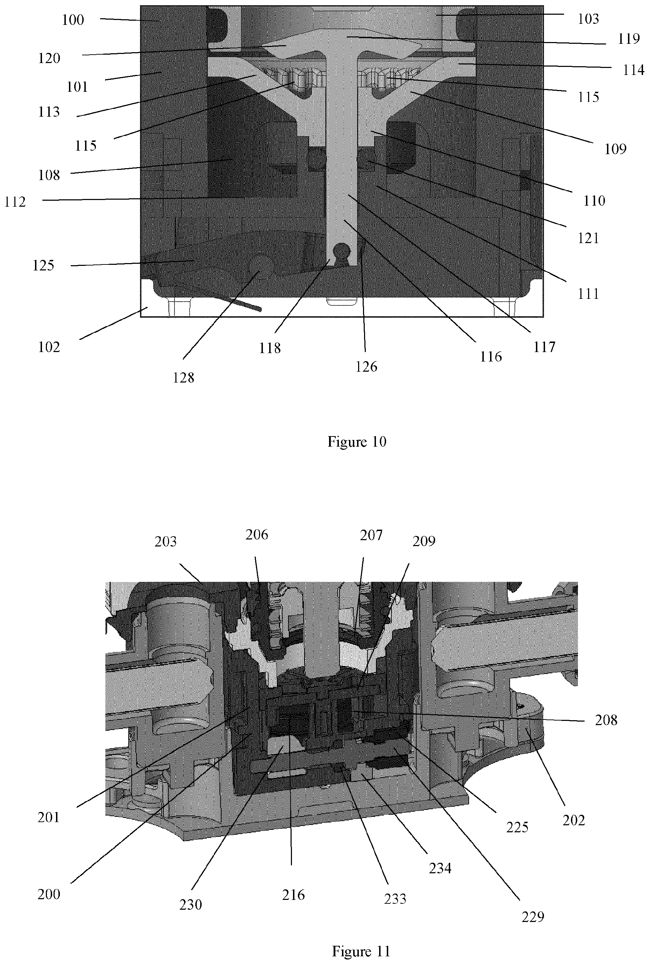

Figure 10 further illustrates the scenario wherein the operating member 122 has the second effective length. The second flow control member 122 is shown in the second end state wherein the stopper portion 120 obstructs fluid flow through the apertures 115 of the first flow control member 109 to the least extent. There is a larger gap between the stopper portion 120 and the conical portion 113 of the first flow control member 109.

The alternative scenario illustrated in Figure 9 and Figure 10 may be appropriate for providing fluid flow control at a site of use having a low pressure mains water supply. It will be appreciated that Figure 9 illustrates the lowest flow condition and Figure 10 illustrates the highest flow condition through the fluid flow control valve assembly 100 with the operating member 122 having the second effective length.

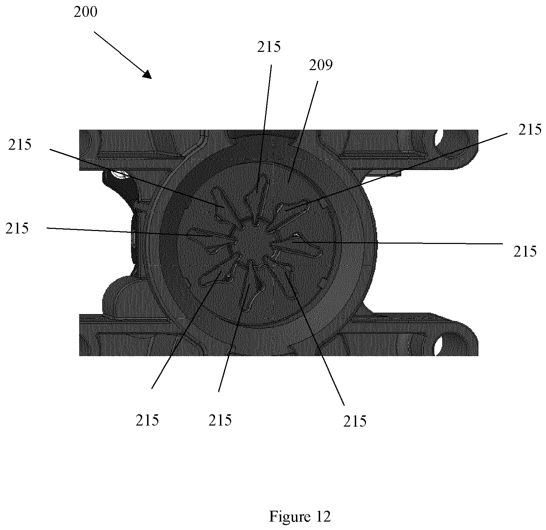

Referring to Figures 11, 12 and 13, there is shown another example of a fluid flow control valve assembly 200.

The fluid flow valve assembly 200 comprises a body 201 attached to a mounting plate 202 adapted to be fixed, in use, to a surface such as a wall. A thermostatic mixer valve assembly 203 is attached to the body 201 of the fluid flow valve assembly 200. The body 201 is disposed between the mounting plate 202 and the thermostatic mixer valve assembly 203.

The thermostatic mixer valve assembly 203 comprises a first inlet configured to be adapted to a first fluid supply pipe and a second inlet configured to be adapted to a second fluid supply pipe. The first fluid supply pipe may convey cold water and the second fluid supply pipe may convey hot water or *vice versa.*

The thermostatic mixer valve assembly 203 comprises a thermostatic mixer valve cartridge 206 including a thermostatic mixer valve. The thermostatic mixer valve has a first valve inlet in fluid communication with the first inlet and a second valve inlet in fluid communication with the second inlet. The thermostatic mixer valve operates to mix the hot water and the cold water to produce a principal stream having a user-desired temperature. The thermostatic mixer valve has an outlet 207 through which the principal stream having the user-desired temperature exits the thermostatic mixer valve cartridge 206.

A waterway 208 within the body 201 is in fluid communication with the outlet 207. Disposed within the waterway 208 is a first flow control member 209. The first flow control member 209 extends across the waterway 208 and is fixed relative to the body 201. A plurality of apertures 215 each provide a fluid flow channel through the first flow control member 209. The first flow control member 209 may be considered a first flow control plate.

The fluid flow control valve assembly 200 comprises a second flow control member 216 that is rotatable relative to the first control member 209. The second flow control member 216 may be considered a second flow control plate.

The second flow control member 216 is adjacent the first flow control member 209. As illustrated, the second flow control member 216 is beneath the first flow control member 209. The second flow control member 216 has apertures therethrough. As will be described in more detail below, rotation of the second flow control member 216 relative to the first flow control member 209 brings the apertures in the second flow control member 216 into or out of alignment with the apertures 215 in the first flow control member 209 to permit more fluid flow or less fluid flow respectively. The apertures in the first flow control member 209 and the second flow control member 216 are configured such that bringing them into or out of alignment with each other provides continuous and gradual fluid flow control, i.e. substantially free of any sudden, relatively large increases or decreases, e.g. step changes, in fluid flow.

The first flow control member 209 may be made from a plastics material or a ceramic material. The second flow control member 216 may be made from a plastics material or a ceramic material.

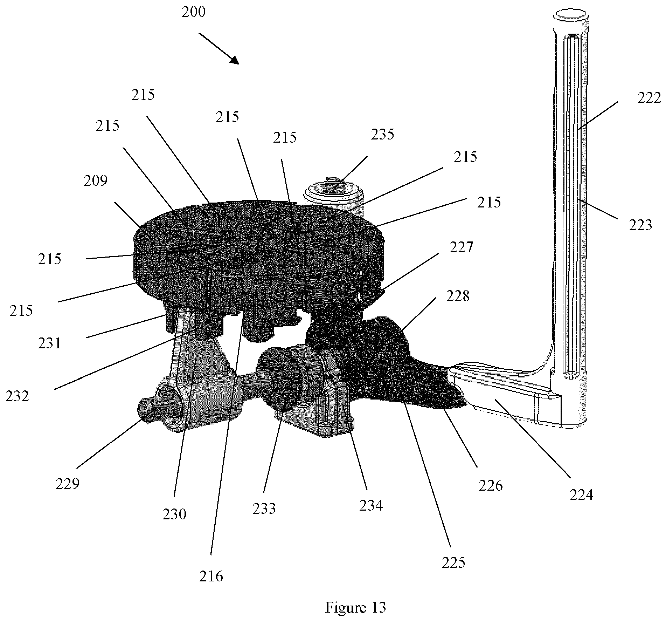

With reference, in particular, to Figure 13, an operating member 222 comprises a rod 223 received within a vertical channel (not shown) in the body 201 (Figure 11). The operating member 222 comprises a foot portion 224 extending laterally from a lower end of the rod 223. The foot portion 224 is perpendicular to the rod 223. The foot portion 224 protrudes from the vertical channel and passes through a vertical slot. An end of the foot portion 224 distal from the rod 223 sits on top of a first end 226 of a lever 225.

The lever 225 is configured to pivot, in use, about a fulcrum 228 between the first end 226 of the lever 225 and a second end 227 of the lever 225. The distance from the first end 226 of the lever 225 to the fulcrum 228 is greater than the distance from the second end 227 of the lever 225 to the fulcrum 228.

At the fulcrum 228, the lever 225 is connected to a first end of an axle 229 extending perpendicularly from the lever 225. A second end of the axle is attached to a paddle 230. A tip of the paddle 230 distal from the axle 229 is disposed between a first retaining projection 231 and a second retaining projection 232, each one of the first retaining projection 231 and the second retaining projection 232 extending downwardly from the second flow control member 216. The first and second retaining projections 231, 232 are spaced apart and dimensioned such that the tip of the paddle 230 is always located, in use, between the first and second retaining projections 231, 232.

At an intermediate point, an O-ring 233 surrounds the axle 229 to prevent fluid from escaping the waterway 208 (Figure 11) and getting to the lever 225. At a point between the O-ring 233 and the first end of the axle 229, the axle 229 is mounted on a bearing 234.

A spring 235 is configured to act on the second end 227 of the lever 225 to bias the lever 225 such that the first end 226 of the lever 225 remains in contact with an underside of the foot portion 224 during operation of the fluid flow control valve assembly 200.

An upper end of the rod 223 may be acted upon directly or indirectly, e.g. in a manner similar to that described above in relation to the operation of the fluid flow control valve assembly 100, to cause linear movement of the operating member 222.

When, in use, the foot portion 224 pushes the first end 226 of the lever 225 down, the axle 229 is caused to rotate in an anticlockwise direction (when viewed from the first end of the axle 229). Consequently, the tip of the paddle 231 pushes against the second retaining projection 232 to cause clockwise rotation of the second flow control member 216 relative to the first flow control member 209 (when viewed from beneath the second flow control member 216.

When, in use, the operating member 222 move upwards, the spring 235 acts to push the first end 226 of the lever 225 up. Consequently, the axle 229 is caused to rotate in a clockwise direction (when viewed from the first end of the axle 229). Consequently, the tip of the paddle 230 pushes against the first retaining projection 231 to cause anticlockwise rotation of the second flow control member 216 relative to the first flow control member 209 (when viewed from beneath the second flow control member 216).

The length of the operating member 222 may or may not be adjustable. The length of the operating member 222 may be adjustable, e.g. in a manner similar to that described above in relation to the operation of the fluid flow control valve assembly 100.

Various modifications may be made to the example embodiments described herein without departing from the scope of the invention.

According to the invention, the first flow control member and the second flow control member are arranged such that, in use, the fluid flow rate through the fluid flow control valve is always a non-zero value.

In some implementations, there may be more than one fluid delivery device downstream of the fluid flow control valve assembly. A diverter may be disposed downstream of the fluid flow control valve assembly to allow a user to select any combination of the fluid delivery devices at a given time. Alternatively, a fluid flow control valve assembly according to this disclosure may be disposed downstream of one or more of the outlets of the diverter, to allow a user to control flow to a downstream fluid delivery device.

Generally, the fluid flow control valve assemblies disclosed herein may be relatively simple mechanically. The fluid flow control valve assemblies disclosed herein may require only a relatively low force to actuate them, which may be beneficial for users, in particular, but not exclusively, users with reduced strength and/or manual dexterity. The fluid flow control valve assemblies disclosed herein may be employed with a variety of user input means, including, for example, a touchscreen, a button, a lever or a rotary dial. Accordingly, the fluid flow control valve assemblies disclosed herein may be utilised in or with a range of ablutionary or plumbing fittings having a variety of design aesthetics.

It will be understood that the invention is not limited to the embodiments described above. Various modifications and improvements can be made without departing from the scope of the appended claims.

## Claims

1. A fluid flow control valve assembly for controlling a flow of fluid through an ablutionary fitting comprising:
a fluid flow control valve comprising:
a first flow control member comprising one or more flow channels;
a second flow control member disposed adjacent to the first flow control member, wherein the second flow control member is moveable relative to the first flow control member;
a first valve actuator arranged to cause movement of the second flow control member relative to the first flow control member; and
an operating member operably connected to the first valve actuator;
wherein, in use, the operating member is operable to be moved in a linear direction and the operating member acts in turn on the first valve actuator to move the second flow control member, wherein movement of the second flow control member adjusts the position of the second flow control member relative to the one or more flow channels in the first flow control member such that a flow rate through the fluid flow control valve may be increased or decreased **characterized in that**
the first flow control member and the second flow control member are arranged such that the fluid flow rate through the fluid flow control valve is always a non-zero value and wherein the first valve actuator comprises a lever.

2. A fluid flow control valve assembly according to claim 1, wherein the first valve actuator is arranged to cause linear movement of the second flow control member relative to the first flow control member.

3. A fluid flow control valve assembly according to claim 1 or claim 2, wherein the first valve actuator is arranged to cause rotation of the second flow control member relative to the first flow control member, optionally wherein the second flow control member is rotatable about an axis perpendicular to the second flow control member.

4. A fluid flow control valve assembly according to any one of the preceding claims, wherein one or more of the flow channels comprise an aperture passing through the first flow control member.

5. A fluid flow control valve assembly according to any one of the preceding claims, wherein a length of the operating member is adjustable.

6. A fluid flow control valve assembly according to claim 5, wherein the length of the operating member is adjustable between a plurality of discrete lengths.

7. A fluid flow control valve assembly according to any one of the preceding claims comprising one or more connecting pieces configured to connect an end of the operating member to another elongate member.

8. A fluid flow control valve assembly according to claim 7 when dependent on claim 6, wherein one or more of the connecting pieces are configured to provide two or more different connecting piece lengths between the end of the operating member and the other elongate member.

9. A fluid flow control valve assembly according claim 5, wherein the length of the operating member is adjustable to have any length within a range of lengths.

10. A fluid flow control valve assembly according to any one of the preceding claims, wherein the ablutionary fitting comprises a means operable to provide a principal stream of fluid having a user-desired temperature.

11. A controller for use in a plumbing system or an ablutionary system, wherein the controller comprises a user input means operably connected to the operating member of a fluid flow control valve assembly according to any one of claims 1 to 10.

12. A controller according to claim 11, wherein: the user input means includes a touchscreen, a button, a lever or a rotary control member such as a rotary dial; or the user input means comprises a rotary control member having a cam surface, the cam surface being configured to cause directly or indirectly linear movement of the operating member when a user rotates the rotary control member.

13. A plumbing system or an ablutionary system comprising a fluid flow control valve assembly according to any one of claims 1 to 10 and/or a controller according to the any one of claims 11 or 12.

14. The plumbing system or the ablutionary system according to claim 13 further comprising one or more fluid delivery devices downstream of the fluid control valve assembly.

## Patentansprüche

1. Fluiddurchfluss-Steuerventilanordnung zum Steuern eines Fluiddurchflusses durch eine Wascharmatur, umfassend:
ein Fluiddurchfluss-Steuerventil, umfassend:
ein erstes Durchflusssteuerelement, das einen oder mehrere Durchflusskanäle umfasst;
ein zweites Durchflusssteuerelement, das an das erste Durchflusssteuerelement angrenzend angeordnet ist, wobei das zweite Durchflusssteuerelement relativ zum ersten Durchflusssteuerelement bewegt werden kann;
eine erste Ventilbetätigungsvorrichtung, die so angeordnet ist, dass sie Bewegung des zweiten Durchflusssteuerelements relativ zum ersten Durchflusssteuerelement bewirkt; und
ein Bedienelement, das mit der ersten Ventilbetätigungsvorrichtung wirkverbunden ist;
wobei das Bedienelement im Gebrauch so betrieben werden kann, dass es in eine lineare Richtung bewegt wird, und das Bedienelement seinerseits auf die erste Ventilbetätigungsvorrichtung einwirkt, um das zweite Durchflusssteuerelement zu bewegen, wobei Bewegung des zweiten Durchflusssteuerelements die Position des zweiten Durchflusssteuerelements relativ zu dem einen oder den mehreren Durchflusskanälen im ersten Durchflusssteuerelement derart anpasst, dass eine Durchflussrate durch das Fluiddurchfluss-Steuerventil erhöht oder verringert werden kann, **dadurch gekennzeichnet, dass** das erste Durchflusssteuerelement und das zweite Durchflusssteuerelement derart angeordnet sind, dass die Fluiddurchflussrate durch das Fluiddurchfluss-Steuerventil immer ein Wert ungleich Null ist, und wobei die erste Ventilbetätigungsvorrichtung einen Hebel umfasst.

2. Fluiddurchfluss-Steuerventilanordnung nach Anspruch 1, wobei die erste Ventilbetätigungsvorrichtung so angeordnet ist, dass sie lineare Bewegung des zweiten Durchflusssteuerelements relativ zum ersten Durchflusssteuerelement bewirkt.

3. Fluiddurchfluss-Steuerventilanordnung nach Anspruch 1 oder Anspruch 2, wobei die erste Ventilbetätigungsvorrichtung so angeordnet ist, dass sie Drehung des zweiten Durchflusssteuerelements relativ zum ersten Durchflusssteuerelement bewirkt, gegebenenfalls wobei das zweite Durchflusssteuerelement um eine Achse senkrecht zum zweiten Durchflusssteuerelement gedreht werden kann.

4. Fluiddurchfluss-Steuerventilanordnung nach einem der vorstehenden Ansprüche, wobei einer oder mehrere der Durchflusskanäle eine Öffnung umfassen, die durch das erste Durchflusssteuerelement verläuft.

5. Fluiddurchfluss-Steuerventilanordnung nach einem der vorstehenden Ansprüche, wobei eine Länge des Bedienelements angepasst werden kann.

6. Fluiddurchfluss-Steuerventilanordnung nach Anspruch 5, wobei die Länge des Bedienelements zwischen einer Vielzahl von diskreten Längen angepasst werden kann.

7. Fluiddurchfluss-Steuerventilanordnung nach einem der vorstehenden Ansprüche, die ein oder mehrere Verbindungsstücke umfasst, die so konfiguriert sind, dass sie ein Ende des Bedienelements mit einem anderen länglichen Element verbinden.

8. Fluiddurchfluss-Steuerventilanordnung nach Anspruch 7 in Abhängigkeit von Anspruch 6, wobei eines oder mehrere der Verbindungsstücke so konfiguriert sind, dass sie zwei oder mehr unterschiedliche Verbindungsstücklängen zwischen dem Ende des Bedienelements und dem anderen länglichen Element bereitstellen.

9. Fluiddurchfluss-Steuerventilanordnung nach Anspruch 5, wobei die Länge des Bedienelements so angepasst werden kann, dass sie eine beliebige Länge innerhalb eines Längenbereichs aufweist.

10. Fluiddurchfluss-Steuerventilanordnung nach einem der vorstehenden Ansprüche, wobei die Wascharmatur ein Mittel umfasst, das so betrieben werden kann, dass es einen Fluidhauptstrom bereitstellt, der eine vom Benutzer gewünschte Temperatur aufweist.

11. Steuereinheit zur Verwendung in einem Sanitärsystem oder einem Waschsystem, wobei die Steuereinheit ein Benutzereingabemittel umfasst, das mit dem Bedienelement einer Fluiddurchfluss-Steuerventilanordnung nach einem der Ansprüche 1 bis 10 wirkverbunden ist.

12. Steuereinheit nach Anspruch 11, wobei: Das Benutzereingabemittel einen Touchscreen, eine Taste, einen Hebel oder ein Drehsteuerelement, wie etwa einen Drehwähler, beinhaltet; oder das Benutzereingabemittel ein Drehsteuerelement umfasst, das eine Nockenfläche aufweist, wobei die Nockenfläche so konfiguriert ist, dass sie direkt oder indirekt lineare Bewegung des Bedienelements bewirkt, wenn ein Benutzer das Drehsteuerelement dreht.

13. Sanitärsystem oder Waschsystem, das eine Fluiddurchfluss-Steuerventilanordnung nach einem der Ansprüche 1 bis 10 und/oder eine Steuereinheit nach einem der Ansprüche 11 oder 12 umfasst.

14. Sanitärsystem oder Waschsystem nach Anspruch 13, das weiter eine oder mehrere Fluidabgabevorrichtungen stromabwärts der Fluid-Steuerventilanordnung umfasst.

## Revendications

1. Ensemble de soupape de régulation de débit de fluide pour réguler un débit de fluide à travers un accessoire ablutionnaire comprenant :
une soupape de régulation de débit de fluide comprenant :
un premier élément de régulation de débit comprenant un ou plusieurs canaux d'écoulement ;
un second élément de régulation de débit disposé de manière adjacente au premier élément de régulation de débit, dans lequel le second élément de régulation de débit est mobile par rapport au premier élément de régulation de débit ;
un premier actionneur de soupape agencé pour provoquer le mouvement du second élément de régulation de débit par rapport au premier élément de régulation de débit ; et
un élément de commande relié de manière opérationnelle au premier actionneur de soupape ;
dans lequel, lors de l'utilisation, l'élément de commande peut être déplacé dans une direction linéaire et l'élément de commande agit à son tour sur le premier actionneur de soupape pour déplacer le second élément de régulation de débit, dans lequel le mouvement du second élément de régulation de débit ajuste la position du second élément de régulation de débit par rapport aux un ou plusieurs canaux d'écoulement dans le premier élément de régulation de débit de telle sorte qu'un débit à travers la soupape de régulation de débit de fluide peut être augmenté ou diminué, **caractérisé en ce que** le premier élément de régulation de débit et le second élément de régulation de débit sont agencés de telle sorte que le débit de fluide à travers la soupape de régulation de débit de fluide soit toujours une valeur non nulle et dans lequel le premier actionneur de soupape comprend un levier.

2. Ensemble de soupape de régulation de débit de fluide selon la revendication 1, dans lequel le premier actionneur de soupape est agencé pour provoquer un mouvement linéaire du second élément de régulation de débit par rapport au premier élément de régulation de débit.

3. Ensemble de soupape de régulation de débit de fluide selon la revendication 1 ou la revendication 2, dans lequel le premier actionneur de soupape est agencé pour provoquer la rotation du second élément de régulation de débit par rapport au premier élément de régulation de débit, facultativement dans lequel le second élément de régulation de débit est rotatif autour d'un axe perpendiculaire au second élément de régulation de débit.

4. Ensemble de soupape de régulation de débit de fluide selon l'une quelconque des revendications précédentes, dans lequel un ou plusieurs des canaux d'écoulement comprennent une ouverture traversant le premier élément de régulation de débit.

5. Ensemble de soupape de régulation de débit de fluide selon l'une quelconque des revendications précédentes, dans lequel une longueur de l'élément de commande est réglable.

6. Ensemble de soupape de régulation de débit de fluide selon la revendication 5, dans lequel la longueur de l'élément de commande est réglable entre une pluralité de longueurs discrètes.

7. Ensemble de soupape de régulation de débit de fluide selon l'une quelconque des revendications précédentes, comprenant une ou plusieurs pièces de connexion configurées pour connecter une extrémité de l'élément de commande à un autre élément allongé.

8. Ensemble de soupape de régulation de débit de fluide selon la revendication 7 lorsqu'elle dépend de la revendication 6, dans lequel une ou plusieurs des pièces de connexion sont configurées pour fournir deux ou plusieurs longueurs de pièces de connexion différentes entre l'extrémité de l'élément de commande et l'autre élément allongé.

9. Ensemble de soupape de régulation de débit de fluide selon la revendication 5, dans lequel la longueur de l'élément de commande est réglable pour présenter n'importe quelle longueur dans une plage de longueurs.

10. Ensemble de soupape de régulation de débit de fluide selon l'une quelconque des revendications précédentes, dans lequel l'accessoire ablutionnaire comprend un moyen pouvant fonctionner pour fournir un flux principal de fluide présentant une température souhaitée par l'utilisateur.

11. Dispositif de commande destiné à être utilisé dans un système de plomberie ou un système d'ablution, dans lequel le dispositif de commande comprend un moyen d'entrée utilisateur connecté de manière opérationnelle à l'élément de commande d'un ensemble de soupape de régulation de débit de fluide selon l'une quelconque des revendications 1 à 10.

12. Dispositif de commande selon la revendication 11, dans lequel : le moyen d'entrée utilisateur inclut un écran tactile, un bouton, un levier ou un élément de commande rotatif tel qu'un cadran rotatif ; ou le moyen d'entrée utilisateur comprend un élément de commande rotatif présentant une surface de came, la surface de came étant configurée pour provoquer directement ou indirectement un mouvement linéaire de l'élément de commande lorsqu'un utilisateur fait tourner l'élément de commande rotatif.

13. Système de plomberie ou système d'ablution comprenant un ensemble de soupape de régulation de débit de fluide selon l'une quelconque des revendications 1 à 10 et/ou un dispositif de commande selon l'une quelconque des revendications 11 ou 12.

14. Système de plomberie ou système d'ablution selon la revendication 13 comprenant en outre un ou plusieurs dispositifs de distribution de fluide en aval de l'ensemble de soupape de régulation de fluide.
